# EUROPEAN PATENT APPLICATION

(11) **EP 1 447 304 A1**
(43) Date of publication of application: **18.08.2004**
(21) Application number: 03445004.9
(22) Date of filing: 15.01.2003
(51) Int. Cl.: B62D 1/12, B62D 7/15

(54) **Steering controller for front and rear wheels**

(71) Applicant: VOLVO LASTVAGNAR AB, 405 08 Göteborg (SE)
(72) Inventor: Brasseur, Jérome, 3000 Leuven (BE)
(74) Representative: Ekström, Nils

(57) **Abstract**

Vehicle comprising a set of front wheel suspension assemblies supporting a pair of front wheels, a set of rear wheel suspension assemblies for supporting a pair of rear wheels and a steering wheel being arranged to control the angular position of the front wheels and/or the rear wheels for steering of the vehicle.

## Description

### TECHNICAL FIELD

The invention relates to a vehicle according to the preamble of claim 1. In particular the invention relates to vehicles having a steering wheel arranged to control the steering of the vehicle.

### BACKGROUND ART

Steering of vehicles is normally controlled by a steering wheel. The steering wheel is normally mechanically coupled to a steering shaft coupled to a steering box, which effects the position of a linkage controlling the position of a set of pivotally arranged wheels. This normal type of steering, using a steering wheel is apprehended as natural, predictable and east to learn for a newcomer, when it concerns handling a vehicle driving along roads. On the other hand, when it concerns manoeuvring in narrow spaces making sharp turns such as when marshalling goods or delivering goods to docks, the movement response of the vehicle in relation to the input from the steering wheel is less predictable and harder to learn. One reason for this is that the steering wheel only provides little information to the driver about the response of the vehicle's movement resulting from the input of the steering wheel. Particularly, the steering wheel does not provide any information about around which point the vehicle turns, that is where the centre of rotation for the vehicle is located. This makes manoeuvring of vehicles in narrow areas difficult to master, since the driver must take in consideration the centre of rotation in order to determine how the rear part of the vehicle will follow the front part when turning.

### DISCLOSURE OF INVENTION

An object of the invention is to provide a steering system for a vehicle, which is easy to comprehend and which makes manoeuvring in narrow areas less difficult. This object is achieved by a vehicle according to the characterising portion of claim 1. A vehicle according to the invention comprises, in addition to a normally arranged steering wheel, an auxiliary steering control operator arranged for steering the vehicle at low speed. The auxiliary steering control operator includes a pivotally arranged control handle, sensors sensing a pivoting motion of said control handle and actuators being arranged to control the angular position of the front wheels and/or the rear wheels in response to pivoting movement of said handle.

The movement of the handle corresponds to the movement of the vehicle. A driver will by looking at the handle be able to judge how the vehicle will respond to the input from the handle. The handle has preferably an elongated shape, generally corresponding to the shape of the vehicle, having a front portion and a rear portion. The handle is hinged such that it can pivot around a pivot axis corresponding to a centre of rotation for the handle. The centre of rotation of the handle is purely virtual. The centre of rotation of the handle is the point around which the handle would turn if it was moveable in the forward direction and if the handle had wheels being directed in the direction indicated by the twist of the handle at the front and rear portion.

The centre of rotation of the handle is located in relation to the rear and front portion of the handle at the same position as the centre of rotation of the vehicle is located in relation to the front and rear part of the vehicle. The handle will thus act as a scale model of the vehicle, which means that the vehicle will turn to the same degree as the handle is turned, when the accelerator pedal of the vehicle is actuated. The handle is however, restricted from movement in the forward direction.

If the vehicle is front wheel steered, the pivot axis is in the rear part of the handle, in a position corresponding to the position of the rear axle of the vehicle. If the vehicle is rear wheel steered, the pivot axis is in the front part of the handle, in a position corresponding to the position of the front axle of the vehicle. If the vehicle is front- and rear wheel steered, the position of the pivot axis depends on the ratio of steering on the front and rear wheels. If the front and rear wheels steer in opposite directions to the same degree, the pivot axis will be positioned at a position of the handle corresponding to a position of the vehicle at equal distance from the front and rear axle. The pivot axis can be positioned in front of or behind the handle in the event the front and rear wheels are steered in the same direction.

It has further been shown in tests that a driver quickly learns to judge the position of the handle by tactile feedback.

In a preferred embodiment of the invention the pivoting motion of the handle is limited in each direction to an angle corresponding to the maximum turning angle of the vehicle. According to this embodiment the degree of turning of the handle exactly corresponds to the degree of turning of the vehicle. The driver will therefore receive accurate tactile feedback about the movement of the vehicle from the degree of pivoting of the handle.

The handle can be used for vehicles provided with rear wheel steering, front wheel steering or a combination of rear and front wheel steering.

The handle preferably positioned inside the cabin of a vehicle in a position beside a driver seat and in front of the backrest of the driver's seat. The driver can thereby conveniently reach the handle sitting in a normal position on the driver's seat.

### BRIEF DESCRIPTION OF DRAWINGS

Preferred embodiments of the invention will be described in more detail below with references to appended drawings, where:
- fig. 1: shows the interior environment of a cabin provided with an auxiliary steering device according to the invention,
- fig. 2: shows a schematic drawing of an auxiliary steering control operator
- fig. 3: shows an allowable pattern of movement for an auxiliary steering device according to the invention, which is able to provide 4 wheel steering,
- fig.4: shows an allowable pattern of movement for an auxiliary steering device according to the invention, which is able to provide front wheel steering,
- fig. 5: shows an allowable pattern of movement for an auxiliary steering device according to the invention, which is able to provide rear wheel steering, and
- fig. 6: shows guide tracks for providing an allowable pattern of movement for an auxiliary steering device according to the invention, which is able to provide front and rear wheel steering.

### MODE(S) FOR CARRYING OUT THE INVENTION

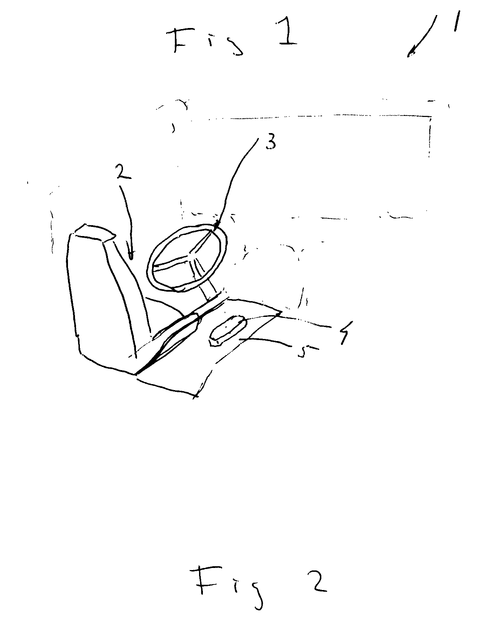

In figure 1 the interior of a cabin 1 of a vehicle is shown. The cabin 1 is provided with a seat 2 for the driver and a steering wheel 3 positioned in front of the seat. The cabin is furthermore provided with a handle 4 of an auxiliary steering control operator. The handle 4 is fixed to a console 5 arranged beside the drivers seat 2 and in front of a backrest 6 of the seat 2.

In figure 2 is shown a schematic drawing of an auxiliary steering control operator 6 arranged for steering the vehicle at low speed. The auxiliary steering control operator includes a pivotally arranged control handle 4, sensors 7 sensing the position of said control handle 4 and actuators 8 being arranged to control the angular position of the wheels 9 of the vehicle in accordance with the position of said handle 4. The sensors 7 are connected to a control unit 10, which transforms the position of the handle 10 into a set position of the wheel 9.

According to a preferred embodiment of the invention, the wheels do not have to actually turn when the driver pivots the handle if the vehicle is at stand still. The system needs direct action only when the vehicle is in motion. As soon as the truck starts moving the wheels will swivel into the desired angle. In an embodiment of the invention, where the wheels are not turned until the vehicle is moving, it is possible to arrange additional means for information to the driver about in which the direction vehicle will move when the vehicle is at motion. Such additional means can be arranged in the form of a screen, where the direction of movement of the vehicle is indicated. However, the handle itself gives feed back about the intended movement since the deviation of the position of the handle from an initial position corresponding to movement in the forward direction corresponds to the actual direction of movement of the vehicle.

In a preferred embodiment, the control unit 10 restricts the use of the handle 4 as an input for control of steering of the vehicle to low speeds, that is at a velocity less than 20 km/h.

Various ways of obtaining electronic steering is known to the skilled in the art and is for instance described in US 5379220, which is hereby incorporated by reference.

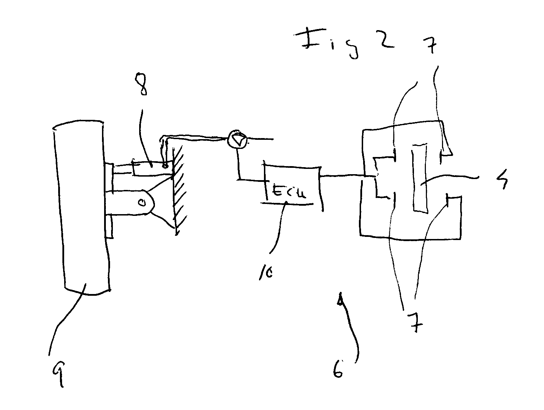

In figure 3 is shown an allowable pattern of movement for an auxiliary steering device according to the invention, which is able to provide front and rear wheel steering. The handle 4 is arranged for limited movement in a single plane 11. The handle comprises a front portion 12 and a rear portion 13. The handle can rotate around a pivot axis 14, which is perpendicular to the plane 11. Furthermore the handle 4 can move in a transverse direction 15 to the pivot axis 14. The location of the pivot axis 14 is therefore freely moveable between the front and rear portions 12, 13 of the handle 4. The freedom of movement of the handle 4 thus corresponds to the freedom of movement of a vehicle having individual steering on a front and a rear pair of wheels.

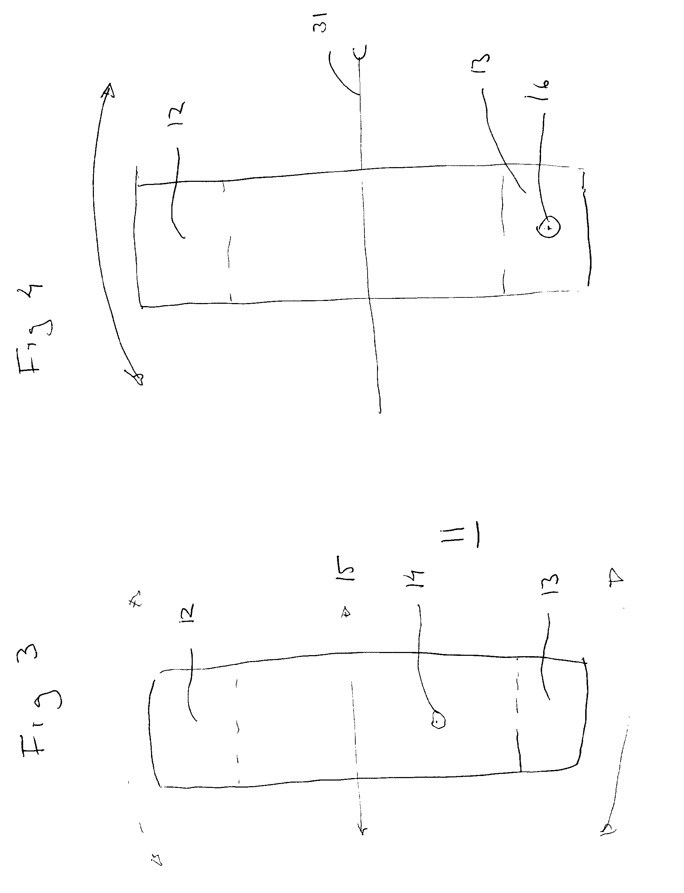

In figure 4 is shown an allowable pattern of movement for an auxiliary steering device according to the invention, which is able to provide front wheel steering. According to this embodiment, the handle can rotate around a pivot axis 16 located in the rear portion 13 of the handle 4. In the event the vehicle is provided with front and rear wheel steering, it is possible to provide the handle 4 with locking means for locking the pivot axis at the rear portion of the handle. A handle according to this embodiment provides for front and rear wheel steering in a first mode, where the location of the pivot axis 14 is freely moveable between the front and rear portions and front wheel steering in a second mode, where the pivot axis is locked to the rear portion of the handle.

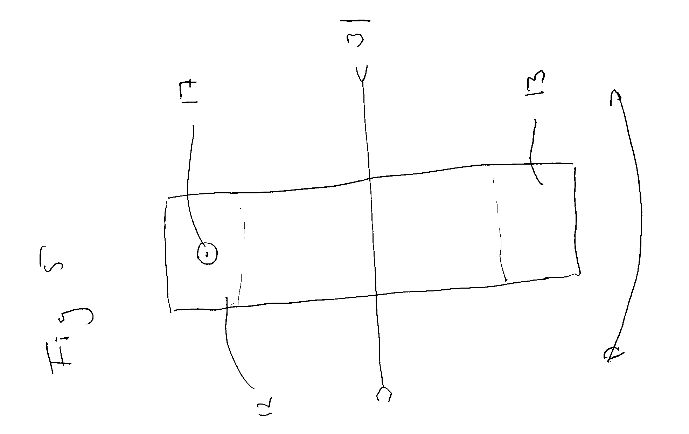

In figure 5 is shown an allowable pattern of movement for an auxiliary steering device according to the invention, which is able to provide rear wheel steering. According to this embodiment, the handle can rotate around a pivot axis 17 located in the front portion 12 of the handle 4. In the event the vehicle is provided with front and rear wheel steering, it is possible to provide the handle 4 with locking means for locking the pivot axis at the front portion of the handle. A handle according to this embodiment provides for front and rear wheel steering in a first mode, where the location of the pivot axis 14 is freely moveable between the front and rear portions and rear wheel steering in a second mode, where the pivot axis is locked to the front portion of the handle.

It is also possible to provide a handle where the pivot axis can be locked both for front wheel steering and for rear wheel steering.

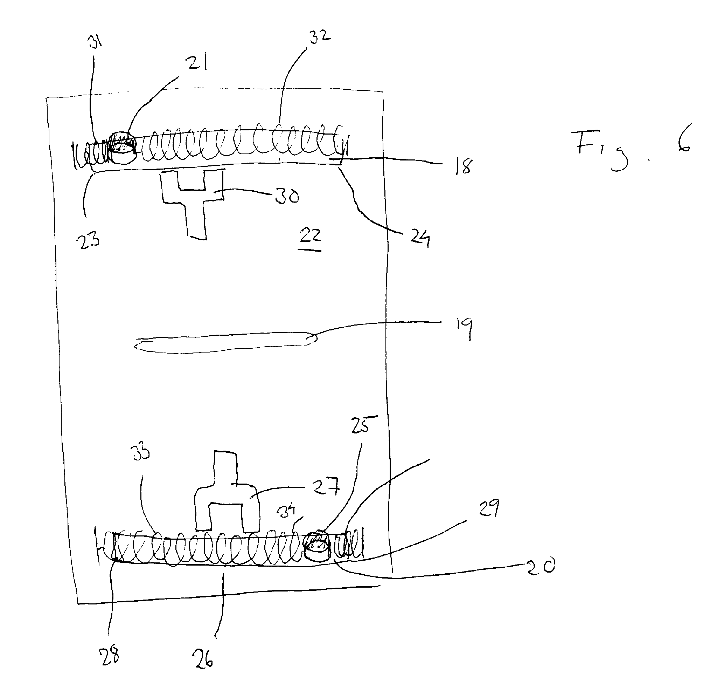

Figure 6 shows guide tracks 18 - 20 for providing an allowable pattern of movement for an auxiliary steering device according to one embodiment of the invention, which is able to provide front and rear wheel steering. The handle 4 is secured and its front portion to a fastening device in the form of a front clip 21 positioned in front track 18 formed by a groove in a support plate 22. The front clip 21 is moveable between a left end stop 23 and a right end stop 24 at respective ends of the front track 18. When the handle 4 is moved to a position where the front clip 21 is positioned at the left end stop 23, the front wheels of the vehicle are turned maximally to the left. When the handle 4 is moved to a position where the front clip 21 is positioned at the right end stop 24, the front wheels of the vehicle are turned maximally to the right.

The handle 4 is secured and its rear portion to a fastening device in the form of a clip 25 positioned in rear track 20 formed by a groove in the support plate 22. The rear portion can according to one control mode be locked in a central position 26 of said rear track 20. A locking fork 27 can be arranged to grip the clip 25 and prevent the grip from movement in the rear track 20. The vehicle is only front wheel steered in this control mode.

If the locking fork 27 does not engage the rear clip 25, the rear clip is moveable between a rear left end stop 28 and a rear right end stop 29. When the rear clip 25 assumes the right end stop, the rear wheels of the vehicle will turn maximally to the right. When the rear clip 25 assumes the left end stop, the rear wheels of the vehicle will turn maximally to the left.

A locking fork 30 may be arranged to lock the front clip 21 in a central position of the front track 18 such that the vehicle can be operated in an only rear wheel steering control mode.

In a preferred embodiment the locking forks 27, 30 are arranged to engage the clips 21, 25, by a pivoting motion of the handle around a pivot axis 31 transversally arranged to the length direction of the handle 4.The pivoting motion should be restricted to a small angle, preferably around 2°

The central track 19 is arranged for stabilising the movement of the handle 4.

Preferably the handle is kept in its central position by biasing springs 31 - 34 which are aiming to reposition the handle in central position corresponding to movement of the vehicle in the forward direction.

The invention can be used on any vehicle comprising a set of front wheel suspension assemblies supporting a pair of front wheels, a set of rear wheel suspension assemblies for supporting a pair of rear wheels and a steering wheel being arranged to control the angular position of the front wheels and/or the rear wheels for steering of the vehicle. An example of such vehicle is given in US 5586031, which is hereby incorporated by reference.

## Claims

1. Vehicle comprising a set of front wheel suspension assemblies supporting a pair of front wheels, a set of rear wheel suspension assemblies for supporting a pair of rear wheels and a steering wheel being arranged to control the angular position of the front wheels and/or the rear wheels for steering of the vehicle, **characterized in that** the vehicle further comprises an auxiliary steering control operator arranged for steering the vehicle at low speed, said auxiliary steering control operator including a pivotally arranged control handle, sensors sensing a pivoting motion of said control handle and actuators being arranged to control the angular position of the front wheels and/or the rear wheels in response to pivoting movement of said handle.

2. Vehicle according to claim 1, **characterized in that** the pivoting motion of the handle is limited in each direction to an angle corresponding to the maximum turning angle of the vehicle.

3. Vehicle according to claims 1 or 2, **characterized in that** the vehicle is front wheel steered and that a pivot axis of the handle is positioned in the front part of the handle.

4. Vehicle according to claims 1 or 2, **characterized in that** the vehicle is rear wheel steered and that a pivot axis of the handle is positioned in the rear part of the handle.

5. Vehicle according to claims 1 or 2, **characterized in that** the vehicle is front and rear wheel steered and that a pivot axis of the handle is freely moveable between the front and rear part of the handle.

6. Vehicle according to any of claims 1- 5,
**characterized in that** the handle is secured to a console that is secured in a cabin of the vehicle.

7. Vehicle according to any of the preceding claims,
**characterized in that** the handle is hinged such that it can pivot around a pivot axis having a corresponding centre of rotation for the handle, said centre of rotation of the handle is located in relation to a rear and front portion of the handle at the same position as a centre of rotation of the vehicle is located in relation to a front and rear part of the vehicle.

8. Vehicle according to claim 6, **characterized in that** the console is mounted beside a driver seat mounted in the cabin and in front of a backrest.
